# FASCICULE DE BREVET EUROPEEN

(11) **EP 0 624 737 B1**
(45) Date de publication et mention de la délivrance du brevet: **21.01.1998**
(21) Numéro de dépôt: 94401063.6
(22) Date de dépôt: 11.05.1994
(51) Int. Cl.: F16F 15/18, F16F 7/10, B60B 9/00

(54) **Dispositif d'atténuation des bruits de roulement des véhicules**
Vorrichtung zur Verminderung des Laufgeräusches von Fahrzeugen
Device for reducing vehicle rolling noise

(30) Priorité: 14.05.1993 FR 9305862
(43) Date de publication de la demande: 17.11.1994
(73) Titulaire: HUTCHINSON, F-75008 Paris (FR)
(72) Inventeur: Simon, Jean-Michel, F-92140 Clamart (FR); Barat, Didier, F-77570 Chateau-Landon (FR)
(74) Mandataire: Picard, Jean-Claude Georges

(56) Documents cités:
- EP-A- 0 275 791
- EP-A- 0 344 923
- DE-A- 4 004 333
- DE-C- 325 363
- DE-C- 4 138 405
- DE-U- 9 209 913
- FR-A- 1 295 476
- GB-A- 531 122
- US-A- 4 935 651

## Description

La présente invention concerne un dispositif d'atténuation des bruits ou vibrations de roulement des roues des véhicules comportant, pour une roue, une ou plusieurs masses inertielles réparties autour de l'arbre de cette roue, ces masses étant connectées à une pièce fixe en rotation et reliées à la roue de sorte à en recevoir les vibrations.

Le filtrage des bruits de roulement des véhicules est actuellement réalisé grâce à des moyens passifs.Selon la demande de brevet européen publiée n° 0 344 923 par exemple,qui représente la technique antérieure la plus pertinente, le moyeu des roues porte des masses d'amortissement reliées à des ressorts de manière à ce que leurs déplacements soient amortis par l'écoulement d'un fluide à travers des conduits reliés à une chambre d'amortissement. Il ne s'agit là que d'un système passif du type batteur, sans apport d'énergie extérieure et donc relativement inefficace. Un organe actif appelé "actuator" est extérieur à la roue et connecté entre le sous-châssis et le moyeu de la roue.

Sur les revêtements rugueux ou bosselés les plus propres à engendrer des bruits de roulement, l'efficacité d'une telle technique est notoirement insuffisante.

Pour obtenir de meilleurs résultats, l'invention vise à mettre en oeuvre des moyens actifs, c'est-à-dire des actionneurs, disposés à proximité des roues pour qu'ils agissent le plus près possible de la source même des bruits de roulement, ce qui évitera de multiplier ces actionneurs.

A cet effet, un dispositif conforme à l'invention est caractérisé en ce que lesdites masses inertielles sont connectées par des actionneurs contrôlés, qui sont des moteurs à réluctance variable, à cette pièce fixe en rotation, pièce telle qu'une fusée dudit arbre, ou alternativement à une pièce tournante qui est solidaire de la roue de sorte à en recevoir les vibrations, pièce telle qu'une jante de ladite roue.

On agit ainsi on ne peut plus directement sur ladite pièce fixe en rotation ou tournante, par action-réaction entre celle-ci et la ou les masses inertielles, ce qui permettra de filtrer efficacement les vibrations dans la bande de fréquences désirée. La ou les masses inertielles agissent donc à la fois en tant que masses d'inertie et en tant que supports pour l'ensemble des moteurs linéaires à réluctance variable.

Les efforts transmis à ladite pièce peuvent être exercés suivant un ou deux axes selon le nombre de moteurs linéaires utilisés. On peut utiliser par exemple un nombre pair de moteurs, opposés deux à deux, ou disposés selon tout autre agencement présentant ou non une symétrie par rapport à l'axe de l'arbre de rotation de la roue.

Selon une disposition complémentaire de l'invention, on prévoit des organes élastiques propres à encaisser les efforts statiques s'exerçant entre la ou les masses inertielles et ladite pièce.

Les organes élastiques pourront être disposés par exemple dans chaque intervalle entre deux moteurs linéaires voisins. On pourra utiliser notamment des blocs d'élastomère adhérisés entre la ou les masses inertielles et la fusée de la roue. On évitera ainsi que les actionneurs aient à engendrer des efforts statiques ; on pourra par ailleurs diminuer les dimensions des actionneurs en choisissant pour lesdits blocs d'élastomère une raideur réduisant les efforts à fournir, pour la bande de fréquence prédominante des vibrations de roues.

Les actionneurs peuvent avantageusement être montés dans une partie tournante, à savoir dans une jante de roue. Dans ce mode d'application, on verra plus bas que l'invention prévoit encore des moyens originaux pour l'alimentation des actionneurs, évitant de faire appel à des systèmes classiques de bagues ou de balais, qui poseraient des problèmes de protection contre la poussière, l'eau, l'huile, la graisse, etc.).

Différents modes d'exécution de l'invention sont décrits ci-dessous à titre d'exemples nullement limitatifs, avec référence aux figures du dessin ci-annexé dans lequel:
- la figure 1 est une vue en coupe transversale d'une fusée de roue de véhicule équipée d'un dispositif conforme à l'invention ;
- la figure 2 est une vue en coupe selon la ligne II-II de la figure 1 ;
- la figure 2a représente le schéma de l'algorithme de contrôle correspondant ;
- la figure 3 est une vue en coupe axiale d'une variante ;
- la figure 3a représente le schéma de l'algorithme de contrôle correspondant ;
- la figure 4 est une vue en coupe axiale, selon la ligne IV-IV de la figure 5, d'une jante de roue équipée conformément à l'invention ;
- la figure 5 est une vue de face du centre de ladite jante ;
- la figure 6 montre l'enroulement d'un stator d'alternateur de roue destiné à alimenter les actionneurs du mode d'application des figures 4 et 5 ;
- la figure 7 représente l'allure de l'induction magnétique dans l'entrefer entre le stator et le rotor de cet alternateur ;
- la figure 8 représente deux spires décalées à 90° du rotor de l'alternateur ;
- la figure 9 représente les liaisons entre ces spires du rotor et les bobinages des actionneurs des figures 4 et 5 ;
- la figure 10 montre l'allure des forces électromotrices des deux spires décalées du rotor ;
- la figure 11 montre l'allure des courants dans les quatre actionneurs du mode de réalisation des figures 4 et 5 ;
- la figure 12 montre, dans une vue analogue à celle de la figure 4, l'agencement de l'alternateur de roue, ainsi que la liaison entre le rotor et les actionneurs ;
- la figure 12a représente partiellement une variante du mode de réalisation de la figure 12 ; et
- la figure 13 représente, dans une vue analogue à celle de la figure 12, une variante selon laquelle un calculateur électronique est interposé entre le rotor de l'alternateur et les actionneurs, le stator étant alimenté séparément.

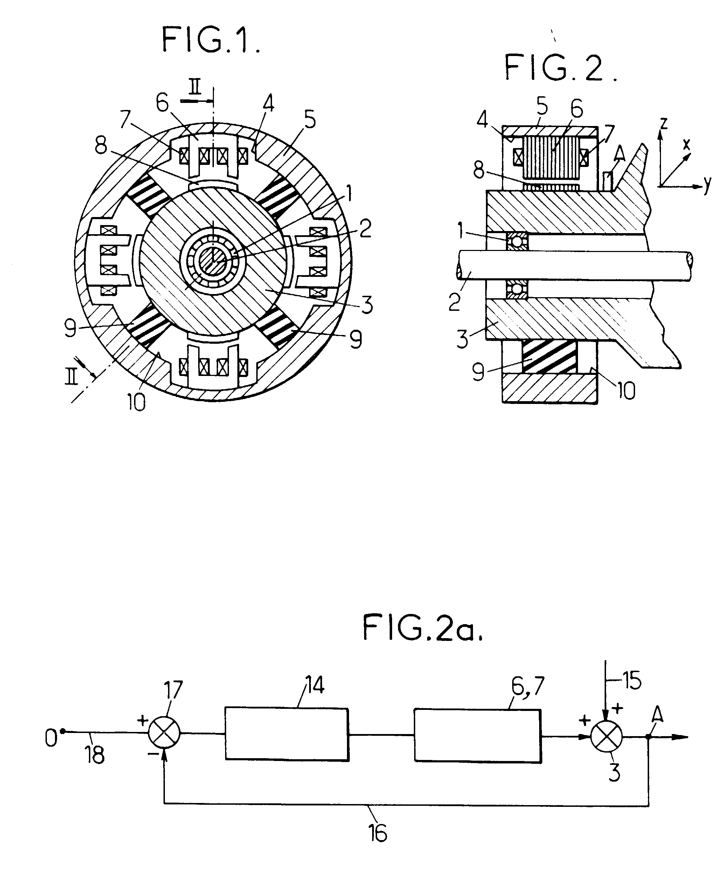

Sur les figures 1 et 2 on a référencé en 1 les roulements interposés entre l'arbre 2 de la roue et la fusée 3. Dans des logements intérieurs 4, répartis autour de l'arbre 2, d'une masse annulaire 5 entourant ladite fusée, sont logés des moteurs linéaires asservis à réluctance variable, à action radiale ; leur carcasse, fixée au fond desdits logements 4, est référencée 6, leurs bobinages 7, et la pièce magnétique associée, fixée sur la fusée 3, est référencée en 8.

Dans les intervalles ménagés ainsi entre deux moteurs successifs, sont disposés, dans le but indiqué plus haut, des blocs d'élastomère 9 adhérisés d'un côté sur la fusée 3, et du côté opposé sur la surface intérieure 10 de la masse annulaire 5.

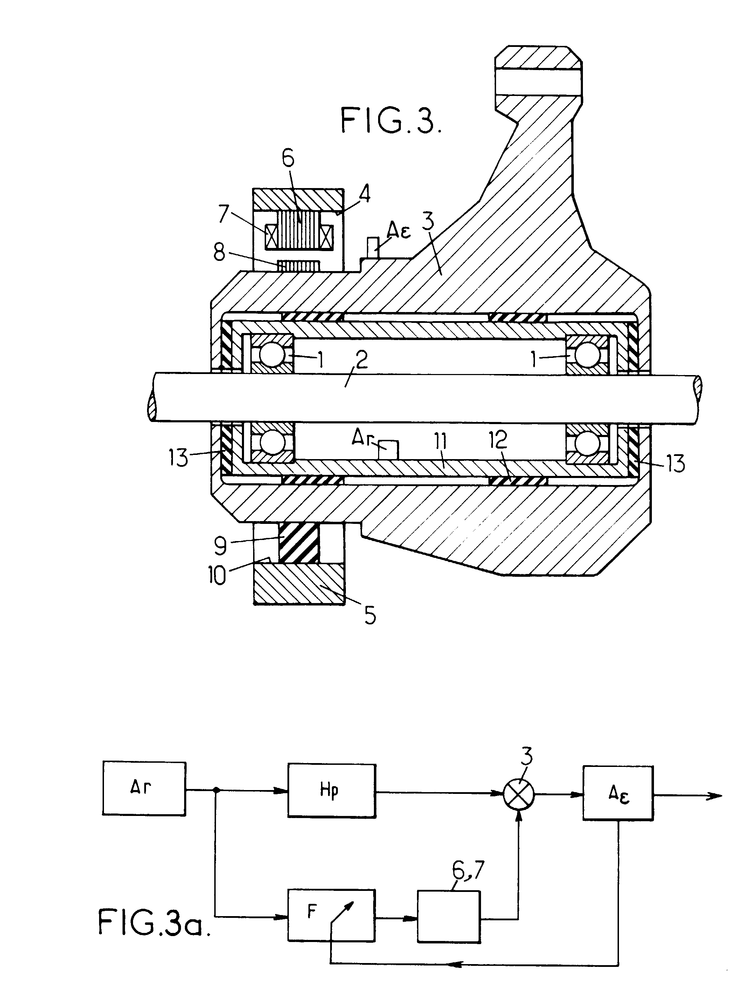

Dans le mode de réalisation de la figure 3 on a utilisé les mêmes références que ci-dessus pour désigner les mêmes organes ou des organes analogues. On a prévu supplémentairement, autour de l'arbre 2, un boîtier rigide 11 portant sur les roulements 1 et maintenu à l'intérieur de la fusée 3 par des blocs d'élastomère à action radiale 12 à faible raideur, et par des blocs d'élastomère à office de butées axiales à forte raideur 13.

Cette solution permet à la fois d'obtenir un étage de filtrage supplémentaire et de ne pas solliciter des déformations du pneumatique.

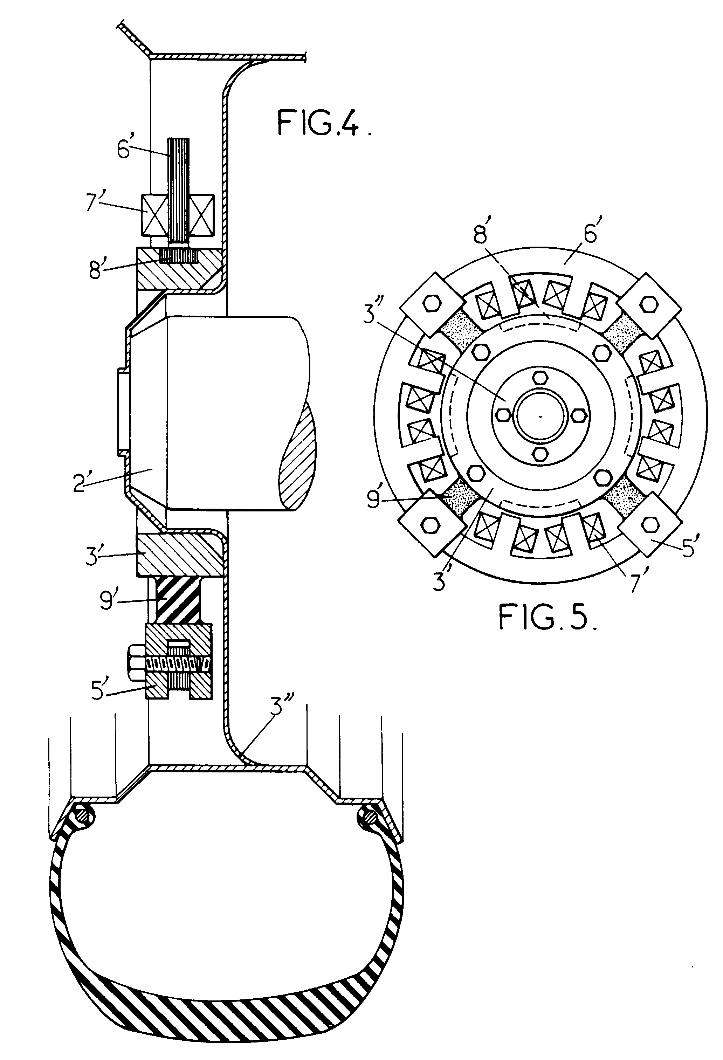

Dans le mode de réalisation des figures 4 et 5, on a représenté l'adaptation du dispositif de l'invention directement sur une jante de roue. On a utilisé sur ces figures, avec l'indice "prime", les mêmes références que sur les figures précédentes pour désigner les parties analogues ou jouant le même rôle que dans les deux modes de réalisation précédents.

Sur ces figures on a référencé en 3" la jante de la roue, qui porte un anneau de fixation 3' fixé par des vis, lequel joue le même rôle que la fusée 3 des autres modes de réalisation. Cet anneau de fixation est relié par des blocs d'élastomère 9', reprenant les efforts statiques, à une masse inertielle 5', 6' ; cette dernière comprend la carcasse magnétique feuilletée 6' de deux moteurs linéaires asservis à réluctance variable, équipés de bobinages 7', ainsi que des pièces de serrage 5' dans lesquelles la carcasse 6' est boulonnée. Extérieurement l'anneau de fixation 3' porte des pièces magnétiques 8' permettant de fermer les circuits magnétiques des deux moteurs. Ces deux moteurs, asservis à partir d'un système de capteurs appropriés, permettent de créer des efforts d'annulation des vibrations, en agissant entre la masse inertielle 5', 6' et la jante 3" suivant deux directions perpendiculaires à l'axe de la roue, l'une verticale, l'autre horizontale, comme dans les autres modes de réalisation.

Cette troisième solution proposée par l'invention permet de ne pas avoir à modifier la fusée de la roue.

Dans tous les modes de réalisation, le système tournant pourra recevoir la puissance électrique nécessaire (quelques dizaines de W) par tout système d'alimentation approprié.

On pourra utiliser par exemple des contacts électriques tournants au niveau de la fusée de roue, ou produire une génération électromagnétique du courant nécessaire. Ceci pourrait être réalisé par exemple grâce à des aimants fixés sur les étriers de frein et induisant du courant dans des bobines fixées sur la jante. La transmission des ondes électromagnétiques pourrait également être assurée par un système de guides d'ondes portés par les étriers, et des antennes réceptrices fixées sur la jante.

En tout cas, les différents modes de réalisation ci-dessus décrits pourront nécessiter différents types d'alimentation des actionneurs, et différents algorithmes de contrôle.

Dans le mode de réalisation des figures 1 et 2, les seules informations disponibles sont les accélérations mesurées sur la fusée 3, ce qui entraîne la nécessité d'un asservissement de type "feed-back", et ceci à partir d'un accéléromètre A monté sur cette fusée. Cet accéléromètre fournit des signaux électriques représentatifs des accélérations verticales z et horizontales x, ces dernières s'exerçant sur les roues dans la direction d'avancement du véhicule.

L'algorithme pourra alors être celui de la figure 2a, dans laquelle le rectangle 6-7 représente l'actionneur horizontal ou vertical concerné, et le rectangle 14 un circuit correcteur de phase. La perturbation d'entrée (vibration horizontale ou verticale de la roue) est représentée par la flèche 15, et s'exerce donc sur la fusée 3 concurremment avec la sortie de l'actionneur 6-7. A ce niveau l'accéléromètre A fournit par la boucle de feed-back 16 un signal de contrôle, représentatif de l'accélération résiduelle sur la fusée, à un opérateur 17 recevant sur son autre entrée 18 un signal de consigne nulle.

Le mode de réalisation de la figure 3 permet de modifier ce schéma en utilisant un accéléromètre à signal de référence Ar disposé sur le boîtier 11 et un accéléromètre AE sur la fusée 3, dont le signal représente donc les accélérations résiduelles subies par la roue, selon les directions z et x précitées.

La figure 3a montre le schéma de l'algorithme alors utilisable, qui est du type dit "feed-forward". Dans ce schéma, Hp représente la fonction de transfert (ou transmittance) entre les accélérations de référence relevées sur le boîtier 11 (recevant les vibrations de la roue), et les accélérations résiduelles relevées sur la fusée 3, mesurées par l'accéléromètre AE. Le signal de ces accélérations résiduelles est utilisé pour régler un filtre F disposé dans la boucle de l'actionneur 6, 7, entre la sortie de l'accéléromètre de référence Ar et la fusée 3.

On va maintenant décrire des systèmes d'alimentation spécifiques, utilisables avec le mode de réalisation des figures 4 et 5, qui se distingue des précédents par la mise en oeuvre, dans une "jante active", d'actionneurs entraînés en rotation, alors que dans les modes de réalisation précédents ils sont fixes en rotation.

Conformément à un autre aspect de l'invention, on crée directement la puissance nécessaire à l'alimentation des actionneurs en utilisant un alternateur entre la jante et l'étrier de frein de la roue, la partie fixée à l'étrier étant le stator, et la partie fixée à la jante étant le rotor. Le stator est alimenté de façon à créer une induction magnétique dans l'entrefer, et le rotor est bobiné de façon à pouvoir récupérer le courant induit lors de la rotation de la roue.

Il est alors possible de profiter d'une telle solution pour que le courant d'alimentation du stator permette de commander les efforts verticaux et horizontaux devant être créés sur la jante par l'intermédiaire des actionneurs. Pour ce faire, le stator est bobiné avec deux enroulements indépendants qui permettent de créer deux répartitions d'inductions magnétiques dans l'entrefer de l'alternateur de roue, le premier enroulement permettant de créer les efforts verticaux dans la direction z, et le second enroulement permettant de créer les efforts horizontaux suivant la direction x.

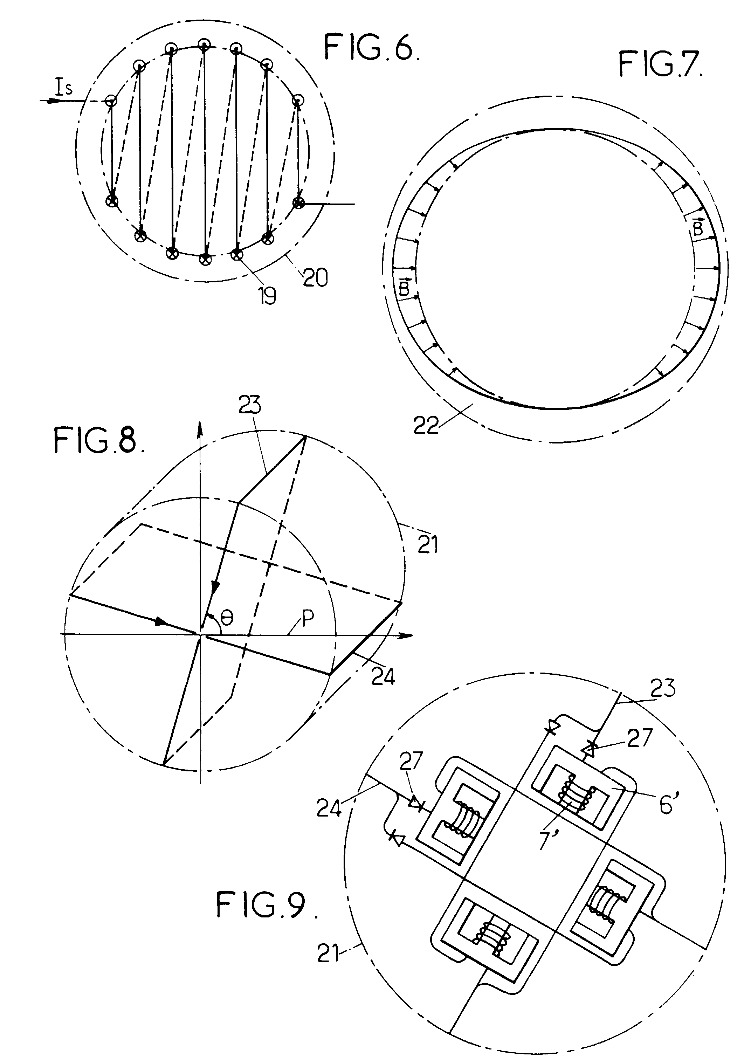

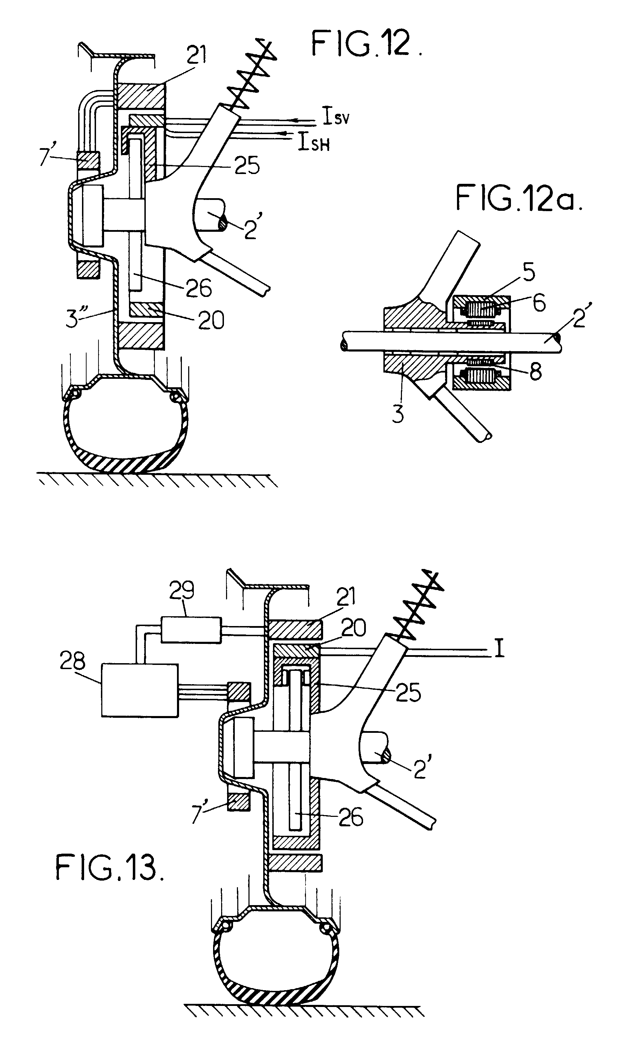

A la figure 6 on a représenté à titre d'exemple un enroulement 19 de stator 20 permettant de créer les efforts verticaux (étant entendu que le même principe serait utilisable pour engendrer les efforts horizontaux), ce stator 20 étant monté par exemple sur un étrier 25 de frein à disque 26, comme représenté à la figure 12. La flèche I_{S} de la figure 6 représente le courant d'alimentation du stator; à la figure 12, I_{SH} désigne le courant d'alimentation de l'enroulement de stator propre à créer les efforts horizontaux et I_{SV} le courant d'alimentation de l'enroulement de stator propre à créer les efforts verticaux.

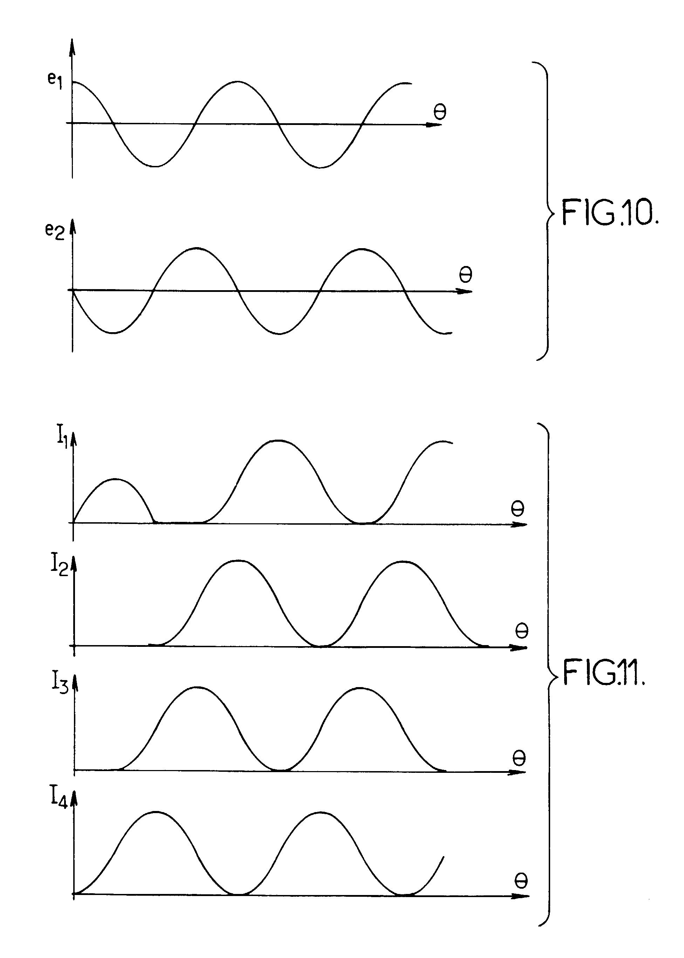

En répartissant convenablement les brins de l'enroulement 19 du stator, pour créer les efforts verticaux, la théorie montre que l'on pourra obtenir, dans l'entrefer 22 entre le stator 20 et le rotor 21 de l'alternateur, une induction magnétique B ayant l'allure représentée à la figure 7. On peut alors utiliser sur le rotor 21 deux spires 23 et 24 (figure 8) décalées de 90° et reliées aux actionneurs 6'-7' de la façon représentée à la figure 9. Grâce à ces branchements et montage des redresseurs 27 comme indiqué, on peut obtenir dans les deux spires 23 et 24 les forces électromotrices e₁ et e₂ décalées de 90° indiquées à la figure 10, ainsi que des courants en opposition de phase, I₁, I₃ et I₂, I₄, dans deux actionneurs diamétralement opposés, et ceci pour chacun des deux couples d'actionneurs utilisés dans l'exemple, comme indiqué à la figure 11 (dans les figures 10 et 11, θ représente l'angle que fait le plan de l'une (23) des spires du rotor avec un plan P de référence - voir figure 8).

Grâce à l'ensemble de ces dispositions et comme le montre la théorie, on peut obtenir sur la jante 3" de la roue des efforts horizontaux et verticaux proportionnels au carré du courant I_{S} d'alimentation correspondant du stator.

A la figure 12a on a montré la possibilité d'établir la masse annulaire 5 ainsi que les actionneurs vers l'intérieur par rapport à la fusée 3, ce qui occupe bien l'espace disponible, beaucoup plus important à cet endroit.

A la figure 13, on a représenté une variante selon laquelle la commande des différents actionneurs 6'-7' est déterminée par un calculateur 28 monté directement dans la jante et relié au rotor 21 par un circuit redresseur 29 également monté dans la jante. Le stator 20 est encore monté sur l'étrier 25 du frein à disque 26, et peut être alimenté en courant constant.

## Revendications

1. Dispositif d'atténuation des bruits ou vibrations de roulement des roues des véhicules comportant, pour une roue, une ou plusieurs masses inertielles (5) réparties autour de l'arbre (2, 2') de cette roue, ces masses (5) étant connectées à une pièce (3) fixe en rotation et reliées à la roue de sorte à en recevoir les vibrations, caractérisé en ce que ces masses (5) sont connectées par des actionneurs contrôlés (6 à 8, 6' à 8'), qui sont des moteurs à réluctance variable, à cette pièce fixe (3') en rotation, pièce telle qu'une fusée dudit arbre, ou alternativement à une pièce (3', 3") tournante qui est solidaire de la roue de sorte à en recevoir les vibrations, pièce telle qu'une jante (3") de ladite roue.

2. Dispositif selon la revendication 1, caractérisé en ce qu'il comporte des organes élastiques (9) propres à encaisser les efforts statiques s'exerçant entre la ou les masses inertielles (5, 6 ; 5', 6') et ladite pièce (3, 3').

3. Dispositif selon la revendication 1 ou 2, caractérisé en ce qu'il comporte un étage de filtrage des vibrations supplémentaire (12, 13) disposé entre ladite pièce (3) et un boîtier rigide (11) monté sur l'arbre de roue (2) par l'intermédiaire de roulements (1).

4. Dispositif selon la revendication 3, caractérisé en ce que ledit étage de filtrage comporte des blocs d'élastomère à faible raideur radiale (12) et des blocs d'élastomère à office de butées axiales à forte raideur (13).

5. Dispositif selon l'une quelconque des revendications précédentes, caractérisé en ce que la ou les masses inertielles (5) et les actionneurs sont montés vers l'intérieur, par rapport à ladite fusée (3).

6. Dispositif selon la revendication 1 ou 2, caractérisé en ce que les actionneurs à réluctance variable (6' à 8') constitués par des moteurs linéaires à réluctance variable sont montés dans la jante (3") de la roue, de même qu'un alternateur pour leur alimentation.

7. Dispositif selon la revendication 1 ou 2, caractérisé en ce que ladite fusée (3) est solidaire d'un accéléromètre (A) propre à fournir des signaux représentatifs des accélérations sollicitant la roue dans les directions verticale (z) et horizontale (x).

8. Dispositif selon la revendication 3 ou 4, caractérisé en ce qu'il comporte un accéléromètre de référence (Ar) solidaire dudit boîtier rigide (11) et propre à fournir des signaux représentatifs des accélérations sollicitant la roue dans les directions verticale (z) et horizontale (x), et un accéléromètre (Aε) solidaire de ladite fusée (3) et fournissant des signaux représentatifs des accélérations résiduelles dans lesdites directions, ces différents signaux étant utilisés dans un algorithme de type "feed-forward".

9. Dispositif selon la revendication 6, caractérisé en ce que l'alternateur comporte un stator (20) solidarisé d'un étrier de frein à disque (25), et un rotor (21) dont les spires induites (23, 24) sont reliées aux bobinages (7') des actionneurs.

10. Dispositif selon la revendication 9, comportant deux paires d'actionneurs (6-7, 6'-7') diamétralement opposés deux à deux, caractérisé en ce que ledit rotor (21) comporte deux spires induites (23, 24) décalées de 90° l'une par rapport à l'autre.

11. Dispositif selon la revendication 9, caractérisé en ce que le rotor (21) de l'alternateur alimente lesdits actionneurs (6'-7') par l'intermédiaire d'un circuit redresseur (29) et d'un calculateur (28).

## Patentansprüche

1. Vorrichtung zur Dämpfung von Rollgerauschen oder Rollschwingungen bei Fahrzeugrädern, enthaltend je Rad eine oder mehrere um die Achswelle (2, 2') dieses Rades herum angeordnete träge Massen (5), wobei die Massen (5) mit einem drehbeweglich angeordneten Bauelement (3) verbunden und derart am Rad befestigt sind, daß sie die Schwingungen aufnehmen, dadurch gekennzeichnet, daß die Massen (5) über gesteuerte Betätigungselemente (6 bis 8, 6' bis 8'), bei denen es sich um Motoren mit veränderlichem magnetischen Widerstand handelt, mit dem drehbeweglich angeordneten Bauelement (3') verbunden sind, wobei das Bauelement (3') ein Achsschenkel der Achswelle sein kann oder stattdessen auch ein sich drehendes Bauelement (3', 3"), wie etwa eine Felge (3") des Rades, das auf eine solche Weise einstückig mit dem Rad ausgebildet ist, daß es dessen Schwingungen aufnimmt.

2. Vorrichtung nach Anspruch 1, gekennzeichnet durch elastische Elemente (9), die geeignet sind, die zwischen der trägen Masse bzw. den trägen Massen (5, 6; 5', 6') und dem Bauelement (3, 3') auftretenden statischen Kräfte aufzunehmen.

3. Vorrichtung nach Anspruch 1 oder 2, gekennzeichnet durch eine zusätzliche schwingungsdämpfende Schicht (12, 13), die zwischen dem Bauelement (3) und einem starren, über Lager (1) auf der Achswelle (2) des Rades befestigten Gehäuse (11) angeordnet ist.

4. Vorrichtung nach Anspruch 3, dadurch gekennzeichnet, daß die schwingungsdämpfende Schicht Elastomerblöcke (12) mit geringer radialer Steifigkeit und als axiale Anschlagelemente dienende Elastomerblöcke (13) mit hoher Steifigkeit aufweist.

5. Vorrichtung nach einem der vorangegangenen Ansprüche, dadurch gekennzeichnet, daß die träge Masse bzw. die trägen Massen (5) und die Betätigungselemente relativ zum Achsschenkel (3) nach Innen hin angeordnet sind.

6. Vorrichtung gemäß Anspruch 1 oder 2, dadurch gekennzeichnet, daß die Betätigungselemente mit veränderbarem magnetischem Widerstand (6' bis 8'), die durch Linearmotoren mit verstellbarem magnetischen Widerstand gebildet werden, ebenso wie ein sie speisender Wechselstromgenerator an der Felge (3") des Rades angebracht sind.

7. Vorrichtung nach Anspruch 1 oder 2, dadurch gekennzeichnet, daß der Achsschenkel (3) einstückig mit einem Geschwindigkeitsmeßgerät (A) ausgebildet ist, welches Signale liefern kann, die einer auf das Rad in vertikaler (z) bzw. horizontaler (x) Richtung einwirkenden Beschleunigung entsprechen.

8. Vorrichtung nach Anspruch 3 oder 4, gekennzeichnet durch ein mit dem steifen Gehäuse (11) einstückig ausgebildetes Referenzgeschwindigkeitsmeßgerät (Ar), welches Signale liefern kann, die der Beschleunigung des Rades in vertikaler (z) bzw. in horizontaler (x) Richtung entsprechen, sowie durch ein mit dem Achsschenkel (3) einstückig ausgebildetes Geschwindigkeitsmeßgerät (Aε), welches Signale liefert, die der jeweiligen Restbeschleunigung in diesen Richtungen entsprechen, wobei diese unterschiedlichen Signale in einem Algorithmus vom "Mischkopplungs"-Typ eingesetzt werden.

9. Vorrichtung nach Anspruch 6, dadurch gekennzeichnet, daß der Wechselstromgenerator einen auf dem Sattel (25) einer Scheibenbremse angeordneten Stator (20) und einen Rotor (21) umfaßt, dessen Induktionswindungen (23, 24) mit den Spulen (7') der Betätigungselemente in Verbindung stehen.

10. Vorrichtung nach Anspruch 9, enthaltend zwei Paare von Betätigungselementen (6 bis 7, 6' bis 7'), die sich paarweise diametral gegenüberliegen, dadurch gekennzeichnet daß der Rotor (21) zwei um 90° zueinander versetzte Induktionswindungen (23, 24) aufweist.

11. Vorrichtung nach Anspruch 9, dadurch gekennzeichnet, daß der Rotor (21) des Wechselstromgenerators die Betätigungselemente (6' bis 7') über eine Gleichrichterschaltung (29) und einen Rechner (28) speist.

## Claims

1. Device for attenuating rolling noise or vibrations of the wheels of vehicles, including, for one wheel, one or more inertial masses (5) distributed about the shaft (2, 2') of said wheel, these masses (5) being connected to a component (3) fixed in rotation, said masses being connected to the wheel so as to receive vibravions from it, characterized in that these masses (5) are connected by controlled actuators (6 to 8, 6' to 8'), which are variable-reluctance motors, to this component (3') fixed in rotation, component such as spindle (3) of the said shaft (2, 2') or alternatively to a rotating component (3, 3") which is joined to the wheel so as to receive the vibrations therefrom, component such as a rim (3") of said wheel.

2. Device according to claim 1, characterized in that it includes elastic members (9) capable of withstanding the static loads exerted between the inertial mass or masses (5, 6; 5', 6') and said component (3, 3').

3. Device according to claim 1 or 2, characterized in that it includes an additional stage (12, 13) for filtering out the vibrations, located between the said component (3) and a rigid casing (11) mounted on the wheel shaft (2) by means of rolling-contact bearings (1).

4. Device according to claim 3, characterized in that the said filtering stage includes elastomer blocks (12) with low radial stiffness, and elastomer blocks (13) acting as axial limit stops with high stiffness.

5. Device according to any one of the preceding claims, characterized in that the inertial mass or masses (5) and the actuators are mounted towards the inside, with respect to the said spindle (3).

6. Device according to claim 1 or 2, characterized in that the variable reluctance actuators (6' to 8') constituted by linear motors with variable reluctance are mounted in the rim (3") of the wheel, like an alternator for their powering.

7. Device according to claim 1 or 2, characterized in that said spindle (3) is secured to an accelerometer (A) capable of providing signals representing the accelerations in the vertical (z) and horizontal (x) directions urging the wheel.

8. Device according to claim 3 or 4, characterized in that it includes a reference accelerometer (Ar) secured to the said rigid casing (11) and capable of providing signals representing accelerations in the vertical (z) and horizontal (x) directions urging the wheel, and an accelerometer (AE) secured to the spindle (3) and providing signals representing residual accelerations in the said directions, these various signals being used in an algorithm of the "feed-forward" type.

9. Device according to claim 6, characterized in that the alternator includes a stator (20) secured to a disc brake calliper (25), and a rotor (21), the armature turns (23, 24) of which are connected to the coils (7') of the actuators.

10. Device according to claim 9, including two pairs of actuators (6-7, 6'-7') diametrically opposite one another in pairs, characterized in that said rotor (21) includes two armature turns (23, 24) offset by 90° with respect to each other.

11. Device according to claim 9, characterized in that the rotor (21) of the alternator powers the said actuators (6'-7') via a rectifier circuit (29) and a computer (28).
